# EUROPÄISCHE PATENTSCHRIFT

(11) **EP 4 022 205 B1**
(45) Veröffentlichungstag und Bekanntmachung des Hinweises auf die Patenterteilung: **11.11.2026**
(21) Anmeldenummer: 20745142.8
(22) Anmeldetag: 21.07.2020
(51) Int. Cl.: F16K 11/085, F16K 11/087, F16K 27/06

(54) **FLUIDVENTIL**
FLUID VALVE
SOUPAPE À FLUIDE

(30) Priorität: 27.08.2019 DE 102019212869
(43) Veröffentlichungstag der Anmeldung: 06.07.2022
(73) Patentinhaber: Schaeffler Technologies AG & Co. KG, 91074 Herzogenaurach (DE)
(72) Erfinder: NOLL, Michael, 81737 München (DE)
(74) Vertreter: Schaeffler Technologies
(86) Internationale Anmeldenummer: PCT/EP2020/070549
(87) Internationale Veröffentlichungsnummer: WO 2021/037442

(56) Entgegenhaltungen:
- WO-A1-2012/005134
- CN-A- 106 015 649
- DE-A1- 10 014 555
- GB-A- 516 614
- US-A- 5 690 135

## Beschreibung

Die vorliegende Erfindung betrifft ein Fluidventil, insbesondere für ein Temperiersystem und/oder Kraftfahrzeug, ein Fluidsystem, insbesondere Temperiersystem, mit dem Fluidventil, ein Kraftfahrzeug mit dem Fluidventil, insbesondere Fluidsystem, sowie ein Verfahren zum Betreiben des Fluidventils.

Die GB 516 614 A betrifft ein Hydrauliksteuerventil, bei dem die zylindrische Trommel in einem Körper durch reibungsmindernde Vorrichtungen wie Kugellager gelagert ist und in Bezug auf das sie umgebende Element eine solche Größe und Form hat, dass sie keinen Kontakt mit dem Element über der zylindrischen Oberfläche der Trommel herstellt.

Die DE 100 14 555 A1 betrifft eine Steuervorrichtung für den Kühlkreislauf einer Brennkraftmaschine mit zwei Kühlwasserteilströmen, die folgende Merkmale aufweist: eine in einem Ventilgehäuse drehbar angeordnete Steuereinrichtung, die mit Durchgangsöffnungen und Sperrwänden versehen ist, zwei in der Umfangswand des Ventilgehäuses angeordnete Zulauföffnungen für die beiden von den Zylinderbänken ausgehenden Kühlwasserteilströmen, eine in der Umfangswand des Ventilgehäuses angeordnete Kurzschlußöffnung für einen Kurzschlußkreislauf durch die beiden Zylinderbänke, eine in der Umfangswand des Ventilgehäuses angeordnete Kühleröffnung für einen Kühlwasserkreislauf zu einem Kühler, wobei die Winkelpositionen der beiden Zulauföffnungen, der Kurzschlußöffnung und der Kühleröffnung in der Umfangswand des Ventilgehäuses so gewählt sind, daß sich neben verschiedenen Öffnungspositionen auch eine Sperrstellung für die beiden Zulauföffnungen ergibt.

Die US 5 690 135 A stellt ein Umleitventil mit Absperrfunktion zur Verwendung in einem Klimatisierungssystem für Flugzeuge vor, das über ein Gehäuse mit einem Einlass, der mit einer Luftquelle verbunden ist, sowie einem ersten und einem zweiten Auslass verfügt, die im Abstand von 90 Grad zueinander angeordnet sind, wobei der erste Auslass mit dem Kühlaggregat des ECS verbunden ist, während der zweite Auslass, der im 90°-Winkel zum Einlass und zum ersten Auslass angeordnet ist, über eine Bypassleitung, die das Kühlaggregat umgeht, mit einer Heizung im Inneren des ECS verbunden ist, in im Ventilgehäuse integriertes Schieberventil sich um 90° drehen lässt, um die Luftzufuhr je nach gewünschter Temperatur der Cockpit- oder Kabinenluft entweder nur zum ersten Auslass, zu beiden Ausgängen, nur zum zweiten Auslass oder zu keinem der beiden Ausgänge zu leiten. Aufgabe der vorliegenden Erfindung ist es, ein Fluidventil bzw. -system zu verbessern.

Diese Aufgabe wird durch die Merkmale des Anspruchs 1 gelöst. Ansprüche 10-12 stellen ein Fluidsystem, insbesondere Temperiersystem, mit einem oder mehreren hier beschriebenen Fluidventilen, ein Kraftfahrzeug mit einem oder mehreren hier beschriebenen Fluidventilen, insbesondere wenigstens einem hier beschriebenen Fluidsystem, bzw. ein Verfahren zum Betreiben eines hier beschriebenen Fluidventils, insbesondere eines hier beschriebenen Fluidsystems, unter Schutz. Die Unteransprüche betreffen vorteilhafte Weiterbildungen.

Nach deg der vorliegenden Erfindung weist ein Fluidventil einen Hohlraum auf, in dem ein ein- oder mehrteiliges Stellglied beweglich, insbesondere drehbar, aufgenommen, insbesondere gelagert, ist.

Das Fluidventil ist in einer Ausführung ein Steuer- bzw. Regelventil und/oder ein Fluidventil für ein Temperiersystem, insbesondere zum Kühlen und/oder Erwärmen, und/oder für ein Kraftfahrzeug bzw. ein Fluidventil eines Fluidsystems, insbesondere Temperiersystems und/oder Kraftfahrzeugs, insbesondere also ein Fluid-, insbesondere Steuer- bzw. Regelventil eines Kraftfahrzeug-Fluid-, insbesondere -Temperiersystems, insbesondere zum Kühlen und/oder Erwärmen eines Motors und/oder Fahrgastraums des Kraftfahrzeugs. Das Kraftfahrzeug ist in einer Ausführung ein Elektro- oder Hybridfahrzeug. Das Fluidventil wird in einer Ausführung von Flüssigkeit durchströmt bzw. ist hierzu vorgesehen, insbesondere eingerichtet, bzw. wird hierzu verwendet, ist also in einer Ausführung ein Flüssigkeits(Steuer- bzw. Regel)Ventil.

Hierfür ist die vorliegende Erfindung aufgrund der baulichen, thermo- und/oder insbesondere strömungsdynamischen Randbedingungen besonders geeignet.

Das Fluidventil weist ein ein- oder mehrteiliges Gehäuse auf, welches seinerseits den Hohlraum aufweist. Das Stellglied und der Hohlraum weisen in einer Ausführung einander gegenüberliegende, in einer Ausführung ringartige bzw. zu (eine)r Drehachse des Stellglieds rotationsymmetrische, insbesondere zylindrische oder teilsphärische, Mantelflächen auf, in einer Weiterbildung der Hohlraum eine innere und das Stellglied eine äußere Mantelfläche.

Nach der vorliegenden Erfindung weist der Hohlraum, insbesondere seine (innere) Mantelfläche, eine erste ein- oder mehrkanalige Zustromöffnung und eine erste ein- oder mehrkanalige Abstromöffnung auf, das Stellglied, insbesondere seine (äußere) Mantelfläche, wenigstens eine ein- oder mehrkanalige erste Stellgliedöffnung und eine ein- oder mehrkanalige zweite Stellgliedöffnung, die durch eine ein- oder mehrkanalige Durchgangspassage (strömungstechnisch) miteinander verbunden sind.

Nach der vorliegenden Erfindung liegt in wenigstens einer Stellgliedstellung, insbesondere Drehstellung, des Stellglieds, die erste Stellgliedöffnung der ersten Zustromöffnung gegenüber und die zweite Stellgliedöffnung der ersten Abstromöffnung gegenüber, so dass im Betrieb Fluid aus der ersten Zustromöffnung (über einen Spalt) in die erste Stellgliedöffnung, durch die Durchgangspassage, und aus der zweiten Stellgliedöffnung (über einen Spalt) in die erste Abstromöffnung strömt, und in wenigstens einer hiervon verschiedenen Stellgliedstellung, insbesondere anderen Drehstellung, des Stellglieds, die erste Stellgliedöffnung nicht der ersten Zustromöffnung und/oder die zweite Stellgliedöffnung nicht der ersten Abstromöffnung gegenüber. In einer Ausführung sind bzw. werden in der einen Stellgliedstellung die erste Zustromöffnung und die erste Abstromöffnung über bzw. durch die Durchgangspassage (strömungstechnisch) miteinander verbunden und in der wenigstens einen hiervon verschiedenen Stellgliedstellung die erste Zustromöffnung und die erste Abstromöffnung über bzw. durch die Durchgangspassage (strömungstechnisch) nicht miteinander verbunden.

Nach der vorliegenden Erfindung ist eine Querschnittsfläche der ersten Stellgliedöffnung größer als eine Querschnittsfläche der ersten Zustromöffnung, in einer Ausführung um wenigstens 0,1%, insbesondere wenigstens 1%, und/oder wenigstens 1 mm². Zusätzlich ist nach der vorliegenden Erfindung eine Querschnittsfläche der ersten Abstromöffnung größer als eine Querschnittsfläche der zweiten Stellgliedöffnung, in einer Ausführung um wenigstens 0,1%, insbesondere wenigstens 1 %, und/oder wenigstens 1 mm².

Nach der Erfindung wird durch diese Querschnittsvergrößerung zwischen bzw. von der ersten Zustromöffnung und der bzw. in die erste(n) Stellgliedöffnung bzw. zwischen bzw. von der zweiten Stellgliedöffnung und der bzw. in die erste(n) Abstromöffnung, insbesondere durch eine hierdurch induzierte Verwirbelung, ein Sog in die erste Stellgliedöffnung bzw. Abstromöffnung hinein erzeugt. Dadurch wird eine Leckage in einem bzw. einen Spalt zwischen Hohlraum und Stellglied, insbesondere ihren einander gegenüberliegenden Mantelflächen, reduziert. Auf diese Weise kann auf eine Berührungsdichtung verzichtet oder deren Anpressdruck reduziert und so insbesondere eine Kraft bzw. ein Drehmoment zum Verstellen des Fluidventils bzw. Stellelements vorteilhaft reduziert werden.

In einer Ausführung weist der Hohlraum, insbesondere seine (innere) Mantelfläche, eine zweite ein- oder mehrkanalige Abstromöffnung auf.

In einer Weiterbildung dieser Ausführung liegt in wenigstens einer Stellgliedstellung, insbesondere Drehstellung, des Stellglieds, die zweite Stellgliedöffnung einer Zustromöffnung, insbesondere des Hohlraums, insbesondere seiner (inneren) Mantelfläche, insbesondere der ersten Zustromöffnung, zweiten Zustromöffnung oder einer hiervon verschiedenen Zustromöffnung, gegenüber und die erste Stellgliedöffnung der zweiten Abstromöffnung gegenüber, so dass im Betrieb Fluid aus dieser Zustromöffnung in die zweite Stellgliedöffnung, durch die Durchgangspassage, und aus der ersten Stellgliedöffnung in die zweite Abstromöffnung strömt, und in wenigstens einer hiervon verschiedenen Stellgliedstellung, insbesondere anderen Drehstellung, des Stellglieds, die zweite Stellgliedöffnung nicht dieser Zustromöffnung und/oder die erste Stellgliedöffnung nicht der zweiten Abstromöffnung gegenüber, wobei die Querschnittsfläche der zweiten Stellgliedöffnung, in einer Ausführung um wenigstens 0,1%, insbesondere wenigstens 1%, und/oder wenigstens 1 mm², größer als eine bzw. die Querschnittsfläche dieser Zustromöffnung und/oder eine Querschnittsfläche der zweiten Abstromöffnung, in einer Ausführung um wenigstens 0,1%, insbesondere wenigstens 1%, und/oder wenigstens 1 mm², größer als die Querschnittsfläche der ersten Stellgliedöffnung ist.

Zusätzlich oder alternativ liegt in einer Weiterbildung dieser Ausführung in wenigstens einer Stellgliedstellung, insbesondere Drehstellung, des Stellglieds, die erste Stellgliedöffnung einer Zustromöffnung, insbesondere des Hohlraums, insbesondere seiner (inneren) Mantelfläche, insbesondere der ersten Zustromöffnung, zweiten Zustromöffnung oder einer hiervon verschiedenen Zustromöffnung, gegenüber und die zweite Stellgliedöffnung der zweiten Abstromöffnung gegenüber, so dass im Betrieb Fluid aus dieser Zustromöffnung in die erste Stellgliedöffnung, durch die Durchgangspassage, und aus der zweiten Stellgliedöffnung in die zweite Abstromöffnung strömt, und in wenigstens einer hiervon verschiedenen Stellgliedstellung, insbesondere anderen Drehstellung, des Stellglieds, die erste Stellgliedöffnung nicht dieser Zustromöffnung und/oder die zweite Stellgliedöffnung nicht der zweiten Abstromöffnung gegenüber, wobei die Querschnittsfläche der ersten Stellgliedöffnung, in einer Ausführung um wenigstens 0,1%, insbesondere wenigstens 1%, und/oder wenigstens 1 mm², größer als eine bzw. die Querschnittsfläche dieser Zustromöffnung und/oder eine bzw. die Querschnittsfläche der zweiten Abstromöffnung, in einer Ausführung um wenigstens 0,1%, insbesondere wenigstens 1%, und/oder wenigstens 1 mm², größer als die Querschnittsfläche der zweiten Stellgliedöffnung ist.

Zusätzlich oder alternativ weist der Hohlraum, insbesondere seine (innere) Mantelfläche, in einer Ausführung eine zweite ein- oder mehrkanalige Zustromöffnung auf.

In einer Weiterbildung dieser Ausführung liegt in wenigstens einer Stellgliedstellung, insbesondere Drehstellung des Stellglieds, die zweite Stellgliedöffnung der zweiten Zustromöffnung gegenüber und die erste Stellgliedöffnung einer Abstromöffnung, insbesondere des Hohlraums, insbesondere seiner (inneren) Mantelfläche, insbesondere der ersten Abstromöffnung, zweiten Abstromöffnung oder einer hiervon verschiedenen Abstromöffnung, gegenüber, so dass im Betrieb Fluid aus der zweiten Zustromöffnung in die zweite Stellgliedöffnung, durch die Durchgangspassage, und aus der ersten Stellgliedöffnung in diese Abstromöffnung strömt, und in wenigstens einer hiervon verschiedenen Stellgliedstellung, insbesondere anderen Drehstellung, des Stellglieds, die zweite Stellgliedöffnung nicht der zweiten Zustromöffnung und/oder die erste Stellgliedöffnung nicht dieser Abstromöffnung gegenüber, wobei die Querschnittsfläche der zweiten Stellgliedöffnung, in einer Ausführung um wenigstens 0,1%, insbesondere wenigstens 1%, und/oder wenigstens 1 mm², größer als eine bzw. die Querschnittsfläche der zweiten Zustromöffnung und/oder eine bzw. die Querschnittsfläche dieser Abstromöffnung, in einer Ausführung um wenigstens 0,1%, insbesondere wenigstens 1%, und/oder wenigstens 1 mm², größer als die Querschnittsfläche der ersten Stellgliedöffnung ist.

Zusätzlich oder alternativ liegt in einer Weiterbildung dieser Ausführung in wenigstens einer Stellgliedstellung, insbesondere Drehstellung, des Stellglieds, die erste Stellgliedöffnung der zweiten Zustromöffnung gegenüber und die zweite Stellgliedöffnung einer Abstromöffnung, insbesondere des Hohlraums, insbesondere seiner (inneren) Mantelfläche, insbesondere der ersten Abstromöffnung, zweiten Abstromöffnung oder einer hiervon verschiedenen Abstromöffnung, gegenüber, so dass im Betrieb Fluid aus der zweiten Zustromöffnung in die erste Stellgliedöffnung, durch die Durchgangspassage, und aus der zweiten Stellgliedöffnung in diese Abstromöffnung strömt, und in wenigstens einer hiervon verschiedenen Stellgliedstellung, insbesondere anderen Drehstellung, des Stellglieds, die erste Stellgliedöffnung nicht der zweiten Zustromöffnung und/oder die zweite Stellgliedöffnung nicht dieser Abstromöffnung gegenüber, wobei die Querschnittsfläche der ersten Stellgliedöffnung, in einer Ausführung um wenigstens 0,1%, insbesondere wenigstens 1%, und/oder wenigstens 1 mm², größer als eine bzw. die Querschnittsfläche der zweiten Zustromöffnung und/oder eine bzw. die Querschnittsfläche dieser Abstromöffnung, in einer Ausführung um wenigstens 0,1 %, insbesondere wenigstens 1%, und/oder wenigstens 1 mm², größer als die Querschnittsfläche der zweiten Stellgliedöffnung ist.

Zusätzlich oder alternativ weist in einer Ausführung das Stellglied wenigstens eine ein- oder mehrkanalige weitere Durchgangspassage mit zwei ein- oder mehrkanaligen Stellgliedöffnungen, insbesondere seiner (äußeren) Mantelfläche, auf, die durch diese weitere Durchgangspassage (strömungstechnisch) miteinander verbunden sind und vorliegend als erste bzw. zweite weitere Stellgliedöffnung bezeichnet werden.

In einer Weiterbildung dieser Ausführung liegt in wenigstens einer Stellgliedstellung, insbesondere Drehstellung, des Stellglieds, die erste weitere Stellgliedöffnung einer Zustromöffnung, insbesondere des Hohlraums, insbesondere seiner (inneren) Mantelfläche, insbesondere der ersten Zustromöffnung, zweiten Zustromöffnung oder einer hiervon verschiedenen Zustromöffnung, gegenüber und die zweite weitere Stellgliedöffnung einer Abstromöffnung, insbesondere des Hohlraums, insbesondere seiner (inneren) Mantelfläche, insbesondere der ersten Abstromöffnung, zweiten Abstromöffnung oder einer hiervon verschiedenen Abstromöffnung, gegenüber, so dass im Betrieb Fluid aus dieser Zustromöffnung in die erste weitere Stellgliedöffnung, durch die weitere Durchgangspassage, und aus der zweiten weiteren Stellgliedöffnung in diese Abstromöffnung strömt, und in wenigstens einer hiervon verschiedenen Stellgliedstellung, insbesondere anderen Drehstellung, des Stellglieds, die erste weitere Stellgliedöffnung nicht dieser Zustromöffnung und/oder die zweite weitere Stellgliedöffnung nicht dieser Abstromöffnung gegenüber, wobei eine Querschnittsfläche der ersten weiteren Stellgliedöffnung, in einer Ausführung um wenigstens 0,1%, insbesondere wenigstens 1%, und/oder wenigstens 1 mm², größer als eine bzw. die Querschnittsfläche dieser Zustromöffnung und/oder eine bzw. die Querschnittsfläche dieser Abstromöffnung, in einer Ausführung um wenigstens 0,1%, insbesondere wenigstens 1%, und/oder wenigstens 1 mm², größer als eine Querschnittsfläche der zweiten weiteren Stellgliedöffnung ist.

Zusätzlich oder alternativ liegt in einer Weiterbildung dieser Ausführung in wenigstens einer Stellgliedstellung, insbesondere Drehstellung, des Stellglieds, die zweite weitere Stellgliedöffnung einer Zustromöffnung, insbesondere des Hohlraums, insbesondere seiner (inneren) Mantelfläche, insbesondere der ersten Zustromöffnung, zweiten Zustromöffnung oder einer hiervon verschiedenen Zustromöffnung, gegenüber und die erste weitere Stellgliedöffnung einer Abstromöffnung, insbesondere des Hohlraums, insbesondere seiner (inneren) Mantelfläche, insbesondere der ersten Abstromöffnung, zweiten Abstromöffnung oder einer hiervon verschiedenen Abstromöffnung, gegenüber, so dass im Betrieb Fluid aus dieser Zustromöffnung in die zweite weitere Stellgliedöffnung, durch die weitere Durchgangspassage, und aus der ersten weiteren Stellgliedöffnung in diese Abstromöffnung strömt, und in wenigstens einer hiervon verschiedenen Stellgliedstellung, insbesondere anderen Drehstellung, des Stellglieds, die zweite weitere Stellgliedöffnung nicht dieser Zustromöffnung und/oder die erste weitere Stellgliedöffnung nicht dieser Abstromöffnung gegenüber, wobei eine bzw. die Querschnittsfläche der zweiten weiteren Stellgliedöffnung, in einer Ausführung um wenigstens 0,1%, insbesondere wenigstens 1%, und/oder wenigstens 1 mm², größer als eine bzw. die Querschnittsfläche dieser Zustromöffnung und/oder eine bzw. die Querschnittsfläche dieser Abstromöffnung, in einer Ausführung um wenigstens 0,1%, insbesondere wenigstens 1%, und/oder wenigstens 1 mm², größer als eine bzw. die Querschnittsfläche der ersten weiteren Stellgliedöffnung ist.

In einer Ausführung ist die Querschnittsfläche wenigstens einer, in einer Weiterbildung jeder, Stellgliedöffnung wenigstens einer, in einer Weiterbildung jeder, Durchgangspassage des Stellglieds, die in wenigstens einer Stellgliedstellung einer Zustromöffnung (des Hohlraums bzw. seiner (inneren) Mantelfläche) gegenüberliegt, größer als die Querschnittsfläche dieser Zustromöffnung, in einer Ausführung um wenigstens 0,1%, insbesondere wenigstens 1%, und/oder wenigstens 1 mm² und/oder für jede Zustromöffnung des Hohlraums bzw. seiner (inneren) Mantelfläche. Zusätzlich oder alternativ ist in einer Ausführung die Querschnittsfläche wenigstens einer, in einer Weiterbildung jeder, Stellgliedöffnung wenigstens einer, in einer Weiterbildung jeder, Durchgangspassage des Stellglieds, die in wenigstens einer Stellgliedstellung einer Abstromöffnung (des Hohlraums bzw. seiner (inneren) Mantelfläche) gegenüberliegt, kleiner als die Querschnittsfläche dieser Abstromöffnung, in einer Ausführung um wenigstens 0,1%, insbesondere wenigstens 1 %, und/oder wenigstens 1 mm² und/oder für jede Abstromöffnung des Hohlraums bzw. seiner (inneren) Mantelfläche.

In einer Ausführung wird durch diese Querschnittsvergrößerung(en) zwischen bzw. von der jeweiligen Zustromöffnung und der bzw. in die ihr gegenüberliegende Stellgliedöffnung bzw. zwischen bzw. von der jeweiligen Stellgliedöffnung und der bzw. in die ihr gegenüberliegende Abstromöffnung, insbesondere durch eine hierdurch induzierte Verwirbelung, ein Sog in die der Zustromöffnung gegenüberliegende Stellgliedöffnung bzw. von der Stellgliedöffnung in die ihr gegenüberliegende Abstromöffnung hinein erzeugt. Dadurch wird in einer Ausführung jeweils, insbesondere in Kombination, eine Leckage in dem bzw. den Spalt zwischen Hohlraum und Stellglied, insbesondere ihren einander gegenüberliegenden Mantelflächen, reduziert. Auf diese Weise kann in einer Ausführung auf eine Berührungsdichtung verzichtet oder deren Anpressdruck reduziert und so insbesondere eine Kraft bzw. ein Drehmoment zum Verstellen des Fluidventils bzw. Stellelements vorteilhaft reduziert werden.

Insbesondere daher weist das Fluidventil einen berührungsdichtungsfreien bzw. -losen, in einer Weiterbildung dichtungsfreien bzw. -losen Spalt, insbesondere (berührungs)dichtungsfreien bzw. -losen Ringspalt, zwischen der ersten Zustromöffnung und der ersten Abstromöffnung und in einer Ausführung zwischen der ersten Zustromöffnung und der zweiten Abstromöffnung und/oder zwischen der zweiten Zustromöffnung und der ersten Abstromöffnung und/oder zwischen der zweiten Zustromöffnung und der zweiten Abstromöffnung und/oder zwischen der ersten und zweiten Zustromöffnung und/oder zwischen der ersten und zweiten Abstromöffnung, in einer Weiterbildung zwischen allen Zu- und Abstromöffnungen des Hohlraums, denen in wenigstens einer Drehstellung eine der Stellgliedöffnungen gegenüberliegt, auf.

In einer Ausführung weist bei einer (ersten) Paarung einer Stellgliedöffnung und einer Zu- oder Abstromöffnung, der diese Stellgliedöffnung in einer Stellgliedstel lung gegenüberliegt, ein Unterschied zwischen der Querschnittsfläche dieser Stellgliedöffnung und der Querschnittsfläche dieser Zu- bzw. Abstromöffnung einen ersten Unterschiedswert und ein Strömungswiderstand zwischen dieser Zu- bzw. Abstromöffnung und einer benachbarten Ventilanschlussöffnung einen ersten Widerstandswert auf und bei wenigstens einer anderen Paarung einer Stellgliedöffnung und einer Zu- oder Abstromöffnung, der diese Stellgliedöffnung in einer Stellgliedstellung gegenüberliegt, ein Unterschied zwischen der Querschnittsfläche dieser Stellgliedöffnung und der Querschnittsfläche dieser Zu- bzw. Abstromöffnung einen anderen Unterschiedswert, der größer als der erste Unterschiedswert ist, und ein Strömungswiderstand zwischen dieser Zu- bzw. Abstromöffnung und einer dieser benachbarten Ventilanschlussöffnung einen anderen Widerstandswert auf, der größer als der erste Widerstandswert ist.

Dabei ist in einer Ausführung eine einer Zustromöffnung benachbarte Ventilanschlussöffnung eine dieser Zustromöffnung stromaufwärts nächste bzw. vorhergehende Ventilanschlussöffnung und/oder eine einer Abstromöffnung benachbarte Ventilanschlussöffnung eine dieser Abstromöffnung stromabwärts nächste bzw. nachfolgende Ventilanschlussöffnung.

In einer Ausführung kann ein bzw. der höhere(r) Strömungswiderstand zwischen einer Zu- bzw. Abstromöffnung und der benachbarten Ventilanschlussöffnung durch die größere Querschnittsflächenvergrößerung von der Zustromöffnung zu der ihr gegenüberliegenden Stellgliedöffnung bzw. von der Stellgliedöffnung zu der ihr gegenüberliegenden Abstromöffnung, insbesondere einen entsprechend stärkeren Wirbel bzw. Sog, wenigstens teilweise kompensiert und so auch bei unterschiedlichen Strömungswiderständen eine Leckage zwischen Zu- und Abströmungöffnungen homogenisiert werden. In einer Ausführung wird bzw. ist das Fluidventil durch entsprechende Dimensionierung der Querschnittsflächen(vergrößerung)en so ausbalanciert, dass eine Leckage durch einen Spalt zwischen Hohlraum und Stellglied trotz unterschiedlicher Strömungswiderstände konstant ist.

Die Bezeichnung "erste" impliziert nicht, dass es auch wenigstens ein "zweites" entsprechendes Merkmal bzw. Element geben muss.

In einer Ausführung durchströmt das Fluid das Fluidventil von der bzw. einer oder mehrerer der Zuströmöffnung(en) durch das Stellglied zu der bzw. einer oder mehrerer der Abströmöffnung(en) bzw. ist/sind die Zuströmöffnung(en) Zuströmöffnung(en) der (inneren) Mantelfläche des Hohlraums zu dem Stellglied und/oder stromaufwärts von dem Stellglied und/oder der bzw. den Abströmöffnung(en) (angeordnet) und/oder die Abströmöffnung(en) von dem Stellglied belieferte Abströmöffnung(en) der (inneren) Mantelfläche des Hohlraums und/oder stromabwärts von der bzw. den Zuströmöffnung(en) und/oder dem Stellglied (angeordnet) bzw. das Fluidventil hierzu vorgesehen, insbesondere eingerichtet bzw. wird hierzu verwendet.

Weitere Vorteile und Merkmale ergeben sich aus den Unteransprüchen und den Ausführungsbeispielen. Hierzu zeigt, teilweise schematisiert:
- Fig. 1:: ein Fluidventil nach einer Ausführung der vorliegenden Erfindung in einem Schnitt quer zu einer Drehachse seines Stellglieds;
- Fig. 2:: ein Fluidsystem mit dem Fluidventil nach einer Ausführung der vorliegenden Erfindung;
- Fig. 3:: ein Fluidventil nach einer weiteren Ausführung der vorliegenden Erfindung bei einer Stellgliedstellung;
- Fig. 4:: das Fluidventil der Fig. 3 bei einer hiervon verschiedenen Stellgliedstellung;
- Fig. 5:: ein Fluidventil nach einer weiteren Ausführung der vorliegenden Erfindung bei einer Stellgliedstellung; und
- Fig. 6:: das Fluidventil der Fig. 5 bei einer hiervon verschiedenen Stellgliedstellung.

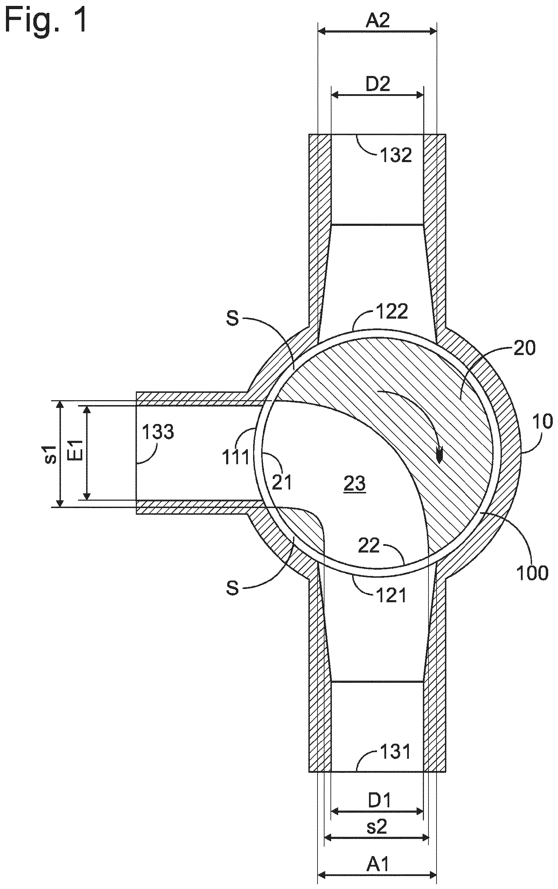

Fig. 1 zeigt ein Fluidventil nach einer Ausführung der vorliegenden Erfindung mit einem Gehäuse 10 mit einem Hohlraum 100, in dem ein Stellglied 20 drehbar um eine zur Zeichenebene der Fig. 1 senkrechte Drehachse aufgenommen ist.

Der Hohlraum 100 bzw. seine innere Mantelfläche weist eine erste Zustromöffnung 111, deren Querschnittsfläche in Fig. 1 durch ihren Durchmesser E1 angedeutet ist, eine erste Abstromöffnung 121, deren Querschnittsfläche in Fig. 1 durch ihren Durchmesser A1 angedeutet ist, und eine zweite Abstromöffnung 122 auf, deren Querschnittsfläche in Fig. 1 durch ihren Durchmesser A2 angedeutet ist.

Das Stellglied 20 bzw. seine äußere Mantelfläche weist eine erste Stellgliedöffnung 21, deren Querschnittsfläche in Fig. 1 durch ihren Durchmesser s1 angedeutet ist, und eine zweite Stellgliedöffnung 22 einer Durchgangspassage 23 auf, wobei eine Querschnittsfläche der zweiten Stellgliedöffnung 22 in Fig. 1 durch ihren Durchmesser s2 angedeutet ist.

In der in Fig. 1 gezeigten Stellgliedstellung liegt die erste Stellgliedöffnung 21 der ersten Zustromöffnung 111 und die zweite Stellgliedöffnung 22 der ersten Abstromöffnung 121 gegenüber.

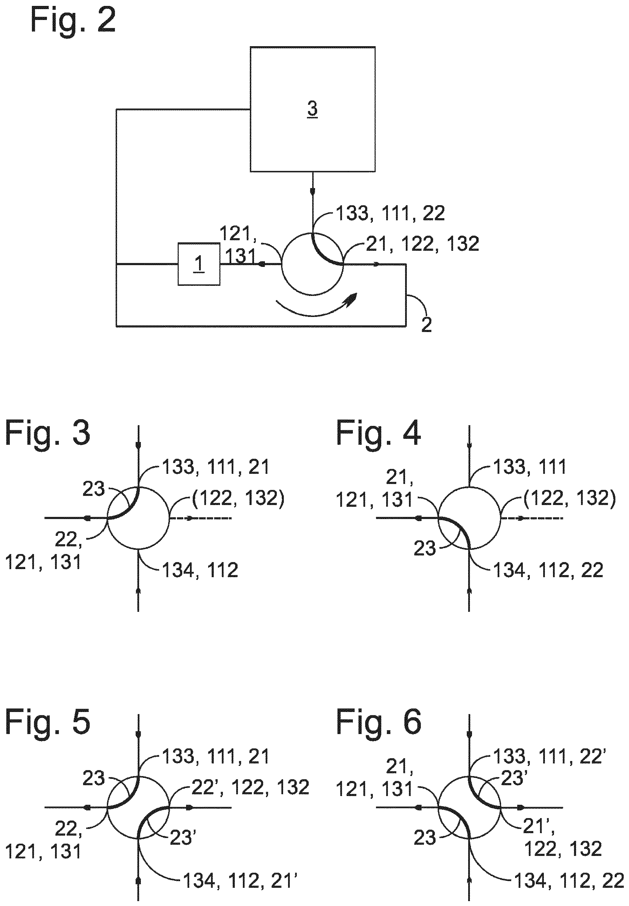

In einer hiergegen um 90° verdrehten Stellgliedstellung, die in Fig. 2 gezeigt ist, liegt die erste Stellgliedöffnung 21 nicht der ersten Zustromöffnung 111, sondern der zweiten Abstromöffnung 122 gegenüber und die zweite Stellgliedöffnung 22 nicht der ersten Abstromöffnung 121, sondern der ersten Zustromöffnung 111.

Hierdurch kann im in Fig. 2 gezeigten Fluidsystem Fluid statt durch einen Kühler 1 durch einen Bypass 2 zurück zu einer Kühlvorrichtung 3 geleitet werden.

Die Querschnittsflächen der ersten und zweiten Stellgliedöffnung 21, 22 sind im Ausführungsbeispiel (s1 = s2) gleich groß und (jeweils) größer als die Querschnittsfläche der ersten Zustromöffnung 111 (s1 > E1 bzw. s2 > E1).

Die Querschnittsflächen der ersten und zweiten Abstromöffnung 121, 122 sind im Ausführungsbeispiel gleich groß (A1 = A2) und (jeweils) größer als die Querschnittsfläche der ersten bzw. zweiten Stellgliedöffnung 21, 22 (A1 > s1 bzw. A2 > s1 bzw. A1 > s2 bzw. A2 > s2).

Mit dem Durchmesser D1 ist in Fig. 1 die Querschnittsfläche einer der ersten Abstromöffnung 121 benachbarten Ventilanschlussöffnung 131 angedeutet, mit dem Durchmesser D2 die Querschnittsfläche einer der zweiten Abstromöffnung 122 benachbarten Ventilanschlussöffnung 132. Die Querschnittsflächen der beiden Ventilanschlussöffnungen 131, 132 sowie die Querschnittsfläche der ersten Zustromöffnung 111 sind im Ausführungsbeispiel gleich groß (D1 = D2 = E1), wobei die Querschnittsfläche zwischen der ersten Zustromöffnung 111 und einer ihr benachbarten Ventilanschlussöffnung 133 im Ausführungsbeispiel konstant ist.

Die Verjüngung A1 → D1 bzw. A2 → D2 bewirkt einen im Vergleich zu der gleichbleibenden Querschnittsfläche zwischen Ventilanschlussöffnung 133 und erster Zustromöffnung 111 erhöhten Strömungswiderstand. Um diesen zu kompensieren, ist der Unterschied von den Querschnittsflächen der Abstromöffnungen 121, 122 zu den Querschnittsflächen der Stellgliedöffnungen 21, 22 entsprechend größer als der Unterschied von der Querschnittsfläche der Zustromöffnung 111 zu den Querschnittsflächen der Stellgliedöffnungen 21, 22.

Durch die vorstehend erläuterten Querschnittsvergrößerungen (vgl. E1 → s1/s2 → A1/A2) wird eine Verwirbelung und hierdurch ein Sog aus der Zuströmöffnung in die ihr gegenüberliegende Stellgliedöffnung bzw. aus der Stellgliedöffnung in die ihr gegenüberliegende Abstromöffnung hinein erzeugt. Dadurch kann der Spalt S zwischen der ersten Zustromöffnung und der ersten und zweiten Abstromöffnung berührungsdichtungsfrei ausgebildet werden.

Wie aus der Figurenfolge Fig. 1 ↔ Fig. 2 ersichtlich, kann das Fluidventil bzw. sein Stellglied in die Fig. 1 gezeigte Stellung, in der die erste Stellgliedöffnung 21 der ersten Zustromöffnung 111 und die zweite Stellgliedöffnung 22 der ersten Abstromöffnung 121 gegenüberliegt und Fluid von der Kühlvorrichtung 3 in die Ventilanschlussöffnung 133, aus der ersten Zustromöffnung 111 in die erste Stellgliedöffnung 21, durch die Durchgangspassage 23, aus der zweiten Stellgliedöffnung 22 in die erste Abstromöffnung 121 und aus der Ventilanschlussöffnung 131 über den Kühler 1 zurück zur Kühlvorrichtung 3 strömt, und in die Fig. 2 gezeigte Stellung geschaltet werden, in der die zweite Stellgliedöffnung 22 der ersten Zustromöffnung 111 und die erste Stellgliedöffnung 21 der zweiten Abstromöffnung 122 gegenüberliegt und Fluid von der Kühlvorrichtung 3 in die Ventilanschlussöffnung 133, aus der ersten Zustromöffnung 111 in die zweite Stellgliedöffnung 22, durch die Durchgangspassage 23, aus der ersten Stellgliedöffnung 21 in die zweite Abstromöffnung 122 und aus der Ventilanschlussöffnung 132 über den Bypass 2 zurück zur Kühlvorrichtung 3 strömt.

Fig. 3, 4 zeigen ein Fluidventil nach einer weiteren Ausführung der vorliegenden Erfindung bei einer Stellgliedstellung in Fig. 2 entsprechender Darstellung. Dabei sind einander entsprechende Merkmale durch identische Bezugszeichen identifiziert, so dass auf die vorstehende Beschreibung Bezug genommen und nachfolgend nur auf Unterschiede eingegangen wird.

In der Ausführung der Fig. 3, 4 weist das Fluidventil eine zweite Zuströmöffnung 112 und eine dieser benachbarte Ventilanschlussöffnung 134 auf, so dass die erste und gegebenenfalls zweite Abströmöffnung 121, 122 wahlweise von der ersten oder zweiten Zuströmöffnung 111, 112 beschickt werden können.

Fig. 5, 6 zeigen ein Fluidventil nach einer weiteren Ausführung der vorliegenden Erfindung bei einer Stellgliedstellung in Fig. 3, 4 entsprechender Darstellung. Dabei sind einander entsprechende Merkmale durch identische Bezugszeichen identifiziert, so dass auf die vorstehende Beschreibung Bezug genommen und nachfolgend nur auf Unterschiede eingegangen wird.

In der Ausführung der Fig. 5, 6 weist das Fluidventil eine weitere Durchgangspassage 23' mit einer ersten weiteren Stellgliedöffnung 21' und einer zweiten weiteren Stellgliedöffnung 22' auf, so dass wahlweise die eine von der ersten und zweiten Abströmöffnung 121, 122 von der einen von der ersten und zweiten Zuströmöffnung 111, 112 und gleichzeitig die andere von der ersten und zweiten Abströmöffnung 121, 122 von der anderen von der ersten und zweiten Zuströmöffnung 111, 112 beschickt werden können.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 1: Kühler
- 2: Bypass
- 3: Kühlvorrichtung
- 10: Gehäuse
- 20: Stellglied
- 21: erste Stellgliedöffnung
- 22: zweite Stellgliedöffnung
- 23: Durchgangspassage
- 21': erste weitere Stellgliedöffnung
- 22': zweite weitere Stellgliedöffnung
- 23': weitere Durchgangspassage
- 100: Hohlraum
- 111: erste Zuströmöffnung
- 112: zweite Zuströmöffnung
- 121: erste Abströmöffnung
- 122: zweite Abströmöffnung
- 131 - 134: Ventilanschlussöffnung
- A1, A2: Durchmesser Abströmöffnung
- D1, D2: Durchmesser Ventilanschlussöffnung
- E1: Durchmesser Zuströmöffnung
- s1, s2: Durchmesser Stellgliedöffnung
- S: Spalt

## Patentansprüche

1. Fluidventil, insbesondere für ein Temperiersystem und/oder Kraftfahrzeug,
mit einem Gehäuse (10), welches einen Hohlraum (100) aufweist, in dem ein Stellglied (20) beweglich aufgenommen ist, wobei
der Hohlraum eine erste Zustromöffnung (111) und eine erste Abstromöffnung (121) aufweist;
das Stellglied wenigstens eine Durchgangspassage (23) mit einer ersten Stellgliedöffnung (21) und einer zweiten Stellgliedöffnung (22) aufweist;
in wenigstens einer Stellgliedstellung die erste Stellgliedöffnung der ersten Zustromöffnung und die zweite Stellgliedöffnung der ersten Abstromöffnung gegenüberliegt und
in wenigstens einer hiervon verschiedenen Stellgliedstellung die erste Stellgliedöffnung nicht der ersten Zustromöffnung und/oder die zweite Stellgliedöffnung nicht der ersten Abstromöffnung gegenüberliegt;
und wobei
eine Querschnittsfläche der ersten Stellgliedöffnung größer als eine Querschnittsfläche der ersten Zustromöffnung und
eine Querschnittsfläche der ersten Abstromöffnung größer als eine Querschnittsfläche der zweiten Stellgliedöffnung ist,
wobei das Fluidventil einen berührungsdichtungsfreien Spalt (S) zwischen der ersten Zustromöffnung (111) und der ersten Abstromöffnung (121) aufweist.

2. Fluidventil nach Anspruch 1, **dadurch gekennzeichnet, dass**
der Hohlraum eine zweite Abstromöffnung (122) aufweist; wobei in wenigstens einer Stellgliedstellung die eine von der ersten und zweiten Stellgliedöffnung (21, 22) der ersten Zustromöffnung (111) und die andere
von der ersten und zweiten Stellgliedöffnung (21, 22) der zweiten Abstromöffnung (122) gegenüberliegt;
in wenigstens einer hiervon verschiedenen Stellgliedstellung diese eine Stellgliedöffnung nicht dieser Zustromöffnung und/oder diese andere Stellgliedöffnung nicht der zweiten Abstromöffnung gegenüberliegt;
und wobei
eine Querschnittsfläche der zweiten Abstromöffnung (122) größer als die Querschnittsfläche dieser anderen Stellgliedöffnung und/oder die Querschnittsfläche dieser einen Stellgliedöffnung größer als eine Querschnittsfläche dieser Zustromöffnung (111) ist.

3. Fluidventil nach dem vorhergehenden Anspruch, **gekennzeichnet durch** einen berührungsdichtungsfreien Spalt (S) zwischen der ersten Zustromöffnung (111) und der zweiten Abstromöffnung (122) und/oder zwischen der ersten und zweiten Abstromöffnung (121, 122).

4. Fluidventil nach einem der vorhergehenden Ansprüche, **dadurch gekennzeichnet, dass**
der Hohlraum eine zweite Zustromöffnung (112) aufweist;
in wenigstens einer Stellgliedstellung die eine von der ersten und zweiten Stellgliedöffnung (21, 22) der zweiten Zustromöffnung (112) und die andere von der ersten und zweiten Stellgliedöffnung (21, 22) einer Abstromöffnung (121, 122) gegenüberliegt;
in wenigstens einer hiervon verschiedenen Stellgliedstellung diese eine Stellgliedöffnung nicht der zweiten Zustromöffnung und/oder diese andere Stellgliedöffnung nicht dieser Abstromöffnung gegenüberliegt;
und wobei
die Querschnittsfläche dieser einen Stellgliedöffnung größer als eine Querschnittsfläche der zweiten Zustromöffnung und/oder
eine Querschnittsfläche dieser Abstromöffnung größer als die Querschnittsfläche dieser anderen Stellgliedöffnung ist.

5. Fluidventil nach dem vorhergehenden Anspruch, **gekennzeichnet durch** einen berührungsdichtungsfreien Spalt (S) zwischen der zweiten Zustromöffnung (112) und der ersten Abstromöffnung (121) und/oder zwischen der ersten und zweiten Zustromöffnung (111, 112).

6. Fluidventil nach einem der Ansprüche 2-3 und einem der Ansprüche 4-5, **gekennzeichnet durch** einen berührungsdichtungsfreien Spalt (S) zwischen der zweiten Zustromöffnung (112) und der zweiten Abstromöffnung (122).

7. Fluidventil nach einem der vorhergehenden Ansprüche, **dadurch gekennzeichnet, dass**
das Stellglied wenigstens eine weitere Durchgangspassage (23') mit einer ersten weiteren Stellgliedöffnung (21') und einer zweiten weiteren Stellgliedöffnung (22') aufweist;
in wenigstens einer Stellgliedstellung die erste weitere Stellgliedöffnung (21') einer Zustromöffnung (111, 112) und die zweite weitere Stellgliedöffnung (22') einer Abstromöffnung (121, 122) gegenüberliegt und
in wenigstens einer hiervon verschiedenen Stellgliedstellung die erste weitere Stellgliedöffnung nicht dieser Zustromöffnung und/oder die zweite weitere Stellgliedöffnung nicht dieser Abstromöffnung gegenüberliegt;
und wobei
eine Querschnittsfläche der ersten weiteren Stellgliedöffnung größer als eine Querschnittsfläche dieser Zustromöffnung und/oder
eine Querschnittsfläche dieser Abstromöffnung größer als eine Querschnittsfläche der zweiten weiteren Stellgliedöffnung ist.

8. Fluidventil nach einem der vorhergehenden Ansprüche, **dadurch gekennzeichnet, dass** die Querschnittsfläche wenigstens einer, insbesondere jeder, Stellgliedöffnung (21, 21', 22, 22') wenigstens einer, insbesondere jeder, Durchgangspassage (23, 23') des Stellglieds, die in wenigstens einer Stellgliedstellung einer Zustromöffnung (111, 112) gegenüberliegt, größer als die Querschnittsfläche dieser Zustromöffnung ist; und/oder die Querschnittsfläche wenigstens einer, insbesondere jeder, Stellgliedöffnung (21, 21', 22, 22') wenigstens einer, insbesondere jeder, Durchgangspassage (23, 23') des Stellglieds, die in wenigstens einer Stellgliedstellung einer Abstromöffnung (121, 122) gegenüberliegt, kleiner als die Querschnittsfläche dieser Abstromöffnung ist.

9. Fluidventil nach einem der vorhergehenden Ansprüche, **dadurch gekennzeichnet, dass**
bei einer ersten Paarung einer Stellgliedöffnung (21, 22) und einer Zu- oder Abstromöffnung (111, 112, 121, 122), der diese Stellgliedöffnung in einer Stellgliedstellung gegenüberliegt, ein Unterschied zwischen der Querschnittsfläche dieser Stellgliedöffnung und der Querschnittsfläche dieser Zu- oder Abstromöffnung einen ersten Unterschiedswert und ein Strömungswiderstand zwischen dieser Zu- oder Abstromöffnung und einer benachbarten Ventilanschlussöffnung (131, 132, 133, 134) einen ersten Widerstandswert aufweist; und
bei wenigstens einer anderen Paarung einer Stellgliedöffnung (21, 22) und einer Zu- oder Abstromöffnung (111, 112, 121, 122), der diese Stellgliedöffnung in einer Stellgliedstellung gegenüberliegt, ein Unterschied zwischen der Querschnittsfläche dieser Stellgliedöffnung und der Querschnittsfläche dieser Zu- oder Abstromöffnung einen anderen Unterschiedswert, der größer als der erste Unterschiedswert ist, und ein Strömungswiderstand zwischen dieser Zu- oder Abstromöffnung und einer benachbarten Ventilanschlussöffnung (131, 132, 133, 134) einen anderen Widerstandswert aufweist, der größer als der erste Widerstandswert ist.

10. Fluidsystem, insbesondere Temperiersystem, mit wenigstens einem Fluidventil nach einem der vorhergehenden Ansprüche.

11. Kraftfahrzeug mit wenigstens einem Fluidventil, insbesondere Fluidsystem, nach einem der vorhergehenden Ansprüche.

12. Verfahren zum Betreiben eines Fluidventils, insbesondere Fluidsystems, nach einem der vorhergehenden Ansprüche, wobei die erste Stellgliedöffnung (21) der ersten Zustromöffnung (111) und die zweite Stellgliedöffnung (22) der ersten Abstromöffnung (121) gegenüberliegt und Fluid aus der ersten Zustromöffnung (111) in die erste Stellgliedöffnung (21) und aus der zweiten Stellgliedöffnung (22) in die erste Abstromöffnung (121) strömt.

## Claims

1. Fluid valve, in particular for a temperature-control system and/or motor vehicle, having a housing (10) with a cavity (100) in which an actuator (20) is accommodated in a movable manner, wherein
the cavity has a first inflow opening (111) and a first outflow opening (121);
the actuator has at least one through-passage (23) with a first actuator opening (21) and with a second actuator opening (22);
in at least one actuator position, the first actuator opening is situated opposite the first inflow opening and the second actuator opening is situated opposite the first outflow opening, and
in at least one different actuator position, the first actuator opening is not situated opposite the first inflow opening and/or the second actuator opening is not situated opposite the first outflow opening;
and wherein
a cross-sectional area of the first actuator opening is greater than a cross-sectional area of the first inflow opening, and
a cross-sectional area of the first outflow opening is greater than a cross-sectional area of the second actuator opening,
wherein the fluid valve has a contact-seal-free gap (S) between the first inflow opening (111) and the first outflow opening (121).

2. Fluid valve according to Claim 1, **characterized in that**
the cavity has a second outflow opening (122); wherein, in at least one actuator position, one of the first and second actuator openings (21, 22) is situated opposite the first inflow opening (111) and the other of the first and second actuator openings (21, 22) is situated opposite the second outflow opening (122);
in at least one different actuator position, this one actuator opening is not situated opposite this inflow opening and/or this other actuator opening is not situated opposite the second outflow opening;
and wherein
a cross-sectional area of the second outflow opening (122) is greater than the cross-sectional area of this other actuator opening, and/or the cross-sectional area of this one actuator opening is greater than a cross-sectional area of this inflow opening (111).

3. Fluid valve according to the preceding claim, **characterized by** a contact-seal-free gap (S) between the first inflow opening (111) and the second outflow opening (122) and/or between the first and second outflow openings (121, 122).

4. Fluid valve according to one of the preceding claims, **characterized in that**
the cavity has a second inflow opening (112);
in at least one actuator position, one of the first and second actuator openings (21, 22) is situated opposite the second inflow opening (112) and the other of the first and second actuator openings (21, 22) is situated opposite an outflow opening (121, 122);
in at least one different actuator position, this one actuator opening is not situated opposite the second inflow opening and/or this other actuator opening is not situated opposite this outflow opening;
and wherein
the cross-sectional area of this one actuator opening is greater than a cross-sectional area of the second inflow opening, and/or
a cross-sectional area of this outflow opening is greater than the cross-sectional area of this other actuator opening.

5. Fluid valve according to the preceding claim, **characterized by** a contact-seal-free gap (S) between the second inflow opening (112) and the first outflow opening (121) and/or between the first and second inflow openings (111, 112).

6. Fluid valve according to either of Claims 2-3 and either of Claims 4-5, **characterized by** a contact-seal-free gap (S) between the second inflow opening (112) and the second outflow opening (122).

7. Fluid valve according to one of the preceding claims, **characterized in that**
the actuator has at least one further through-passage (23') with a first further actuator opening (21') and with a second further actuator opening (22');
in at least one actuator position, the first further actuator opening (21') is situated opposite an inflow opening (111, 112) and the second further actuator opening (22') is situated opposite an outflow opening (121, 122), and
in at least one different actuator position, the first further actuator opening is not situated opposite this inflow opening and/or the second further actuator opening is not situated opposite this outflow opening;
and wherein
a cross-sectional area of the first further actuator opening is greater than a cross-sectional area of this inflow opening, and/or
a cross-sectional area of this outflow opening is greater than a cross-sectional area of the second further actuator opening.

8. Fluid valve according to one of the preceding claims, **characterized in that** the cross-sectional area of at least one, in particular each, actuator opening (21, 21', 22, 22') of at least one, in particular each, through-passage (23, 23') of the actuator that, in at least one actuator position, is situated opposite an inflow opening (111, 112) is greater than the cross-sectional area of this inflow opening; and/or the cross-sectional area of at least one, in particular each, actuator opening (21, 21', 22, 22') of at least one, in particular each, through-passage (23, 23') of the actuator that, in at least one actuator position, is situated opposite an outflow opening (121, 122) is less than the cross-sectional area of this outflow opening.

9. Fluid valve according to one of the preceding claims, **characterized in that**,
for a first pairing of an actuator opening (21, 22) and an inflow or outflow opening (111, 112, 121, 122) opposite which this actuator opening is situated in an actuator position, a difference between the cross-sectional area of this actuator opening and the cross-sectional area of this inflow or outflow opening has a first difference value, and a flow resistance between this inflow or outflow opening and a valve port opening (131, 132, 133, 134) adjacent thereto has a first resistance value; and,
for at least one other pairing of an actuator opening (21, 22) and an inflow or outflow opening (111, 112, 121, 122) opposite which this actuator opening is situated in an actuator position, a difference between the cross-sectional area of this actuator opening and the cross-sectional area of this inflow or outflow opening has a different difference value, which is greater than the first difference value, and a flow resistance between this inflow or outflow opening and a valve port opening (131, 132, 133, 134) adjacent thereto has a different resistance value, which is greater than the first resistance value.

10. Fluid system, in particular a temperature-control system, having at least one fluid valve according to one of the preceding claims.

11. Motor vehicle having at least one fluid valve, in particular a fluid system, according to one of the preceding claims.

12. Method for operating a fluid valve, in particular a fluid system, according to one of the preceding claims, wherein the first actuator opening (21) is situated opposite the first inflow opening (111) and the second actuator opening (22) is situated opposite the first outflow opening (121) and fluid flows from the first inflow opening (111) into the first actuator opening (21) and from the second actuator opening (22) into the first outflow opening (121).

## Revendications

1. Soupape pour fluide, notamment pour un système de régulation de température et/ou un véhicule automobile, comprenant un boîtier (10) qui présente une cavité (100) dans laquelle un organe de réglage (20) est reçu de manière mobile, dans laquelle
la cavité présente une première ouverture d'arrivée (111) et une première ouverture d'évacuation (121) ; l'organe de réglage présente au moins un passage traversant (23) comportant une première ouverture d'organe de réglage (21) et une deuxième ouverture d'organe de réglage (22) ;
dans au moins une position de l'organe de réglage, la première ouverture d'organe de réglage est située en regard de la première ouverture d'arrivée et la deuxième ouverture d'organe de réglage est située en regard de la première ouverture d'évacuation, et
dans au moins une position de l'organe de réglage différente de celle-ci, la première ouverture d'organe de réglage n'est pas située en regard de la première ouverture d'arrivée et/ou la deuxième ouverture d'organe de réglage n'est pas située en regard de la première ouverture d'évacuation ;
et dans laquelle
une surface de section transversale de la première ouverture d'organe de réglage est supérieure à une surface de section transversale de la première ouverture d'arrivée, et
une surface de section transversale de la première ouverture d'évacuation est supérieure à une surface de section transversale de la deuxième ouverture d'organe de réglage,
le clapet pour fluide présente un jeu (S) exempt de joint d'étanchéité par contact entre la première ouverture d'arrivée (111) et la première ouverture d'évacuation (121).

2. Soupape pour fluide selon la revendication 1, **caractérisée en ce que**
la cavité présente une deuxième ouverture d'évacuation (122) ; dans laquelle
dans au moins une position de l'organe de réglage, l'une de la première et de la deuxième ouverture d'organe de réglage (21, 22) est située en regard de la première ouverture d'arrivée (111) et l'autre de la première et de la deuxième ouverture d'organe de réglage (21, 22) est située en regard de la deuxième ouverture d'évacuation (122) ;
dans au moins une position de l'organe de réglage différente de celle-ci, cette première ouverture d'organe de réglage n'est pas située en regard de cette ouverture d'arrivée et/ou cette autre ouverture d'organe de réglage n'est pas située en regard de la deuxième ouverture d'évacuation ;
et dans laquelle
une surface de section transversale de la deuxième ouverture d'évacuation (122) est supérieure à la surface de section transversale de cette autre ouverture d'organe de réglage et/ou une surface de section transversale de cette première ouverture d'organe de réglage est supérieure à une surface de section transversale de cette ouverture d'arrivée (111).

3. Soupape pour fluide selon la revendication précédente, **caractérisée par** un jeu (S) exempt de joint d'étanchéité par contact entre la première ouverture d'arrivée (111) et la deuxième ouverture d'évacuation (122) et/ou entre la première et la deuxième ouverture d'évacuation (121, 122).

4. Soupape pour fluide selon l'une des revendications précédentes, **caractérisée en ce que**
la cavité présente une deuxième ouverture d'arrivée (112) ;
dans au moins une position de l'organe de réglage, l'une de la première et de la deuxième ouverture d'organe de réglage (21, 22) est située en regard de la deuxième ouverture d'arrivée (112) et l'autre de la première et de la deuxième ouverture d'organe de réglage (21, 22) est située en regard d'une ouverture d'évacuation (121, 122) ;
dans au moins une position de l'organe de réglage différente de celle-ci, cette première ouverture d'organe de réglage n'est pas située en regard de la deuxième ouverture d'arrivée et/ou cette autre ouverture d'organe de réglage n'est pas située en regard de cette ouverture d'évacuation ;
et dans laquelle
la surface de section transversale de cette première ouverture d'organe de réglage est supérieure à une surface de section transversale de la deuxième ouverture d'arrivée, et/ou
une surface de section transversale de cette ouverture d'évacuation est supérieure à la surface de section transversale de cette autre ouverture d'organe de réglage.

5. Soupape pour fluide selon la revendication précédente, **caractérisée par** un jeu (S) exempt de joint d'étanchéité par contact entre la deuxième ouverture d'arrivée (112) et la première ouverture d'évacuation (121) et/ou entre la première et la deuxième ouverture d'arrivée (111, 112).

6. Soupape pour fluide selon l'une des revendications 2 à 3 et l'une des revendications 4 à 5, **caractérisée par** un jeu (S) exempt de joint d'étanchéité par contact entre la deuxième ouverture d'arrivée (112) et la deuxième ouverture d'évacuation (122).

7. Soupape pour fluide selon l'une des revendications précédentes, **caractérisée en ce que**
l'organe de réglage présente au moins un autre passage traversant (23') comportant une première autre ouverture d'organe de réglage (21') et une deuxième autre ouverture d'organe de réglage (22') ;
dans au moins une position de l'organe de réglage, la première autre ouverture d'organe de réglage (21') est située en regard d'une ouverture d'arrivée (111, 112) et la deuxième autre ouverture d'organe de réglage (22') est située en regard d'une ouverture d'évacuation (121, 122), et
dans au moins une position de l'organe de réglage différente de celle-ci, la première autre ouverture d'organe de réglage n'est pas située en regard de cette ouverture d'arrivée et/ou la deuxième autre ouverture d'organe de réglage n'est pas située en regard de cette ouverture d'évacuation ;
et dans laquelle
une surface de section transversale de la première autre ouverture d'organe de réglage est supérieure à une surface de section transversale de cette ouverture d'arrivée, et/ou
une surface de section transversale de cette ouverture d'évacuation est supérieure à une surface de section transversale de la deuxième autre ouverture d'organe de réglage.

8. Soupape pour fluide selon l'une des revendications précédentes, **caractérisée en ce que** la surface de section transversale d'au moins une, notamment de chaque ouverture d'organe de réglage (21, 21', 22, 22'), d'au moins un, notamment de chaque passage traversant (23, 23'), de l'organe de réglage, qui est située en regard d'une ouverture d'arrivée (111, 112) dans au moins une position de l'organe de réglage, est supérieure à la surface de section transversale de cette ouverture d'arrivée ; et/ou la surface de section transversale d'au moins une, notamment de chaque ouverture d'organe de réglage (21, 21', 22, 22'), d'au moins un, notamment de chaque passage traversant (23, 23'), de l'organe de réglage, qui est située en regard d'une ouverture d'évacuation (121, 122) dans au moins une position de l'organe de réglage, est inférieure à la surface de section transversale de cette ouverture d'évacuation.

9. Soupape pour fluide selon l'une des revendications précédentes, **caractérisée en ce que**
pour une première combinaison d'une ouverture d'organe de réglage (21, 22) et d'une ouverture d'arrivée ou d'évacuation (111, 112, 121, 122), en regard de laquelle cette ouverture d'organe de réglage est située dans une position de l'organe de réglage, une différence entre la surface de section transversale de cette ouverture d'organe de réglage et la surface de section transversale de cette ouverture d'arrivée ou d'évacuation présente une première valeur de différence, et une résistance à l'écoulement entre cette ouverture d'arrivée ou d'évacuation et une ouverture de raccordement de soupape adjacente (131, 132, 133, 134) présente une première valeur de résistance ; et
pour au moins une autre combinaison d'une ouverture d'organe de réglage (21, 22) et d'une ouverture d'arrivée ou d'évacuation (111, 112, 121, 122), en regard de laquelle cette ouverture d'organe de réglage est située dans une position de l'organe de réglage, une différence entre la surface de section transversale de cette ouverture d'organe de réglage et la surface de section transversale de cette ouverture d'arrivée ou d'évacuation présente une autre valeur de différence, qui est supérieure à la première valeur de différence, et une résistance à l'écoulement entre cette ouverture d'arrivée ou d'évacuation et une ouverture de raccordement de soupape adjacente (131, 132, 133, 134) présente une autre valeur de résistance, qui est supérieure à la première valeur de résistance.

10. Système pour fluide, notamment système de régulation de température, comprenant au moins une soupape pour fluide selon l'une des revendications précédentes.

11. Véhicule automobile comprenant au moins une soupape pour fluide, notamment un système pour fluide, selon l'une des revendications précédentes.

12. Procédé de fonctionnement d'une soupape pour fluide, notamment d'un système pour fluide, selon l'une des revendications précédentes, dans lequel la première ouverture d'organe de réglage (21) est située en regard de la première ouverture d'arrivée (111) et la deuxième ouverture d'organe de réglage (22) est située en regard de la première ouverture d'évacuation (121), et un fluide s'écoule de la première ouverture d'arrivée (111) dans la première ouverture d'organe de réglage (21) et de la deuxième ouverture d'organe de réglage (22) dans la première ouverture d'évacuation (121).
